(19)

Europäisches
Patentamt

European
Patent Office

Office européen
des brevets

(11)  **EP 4 303 792 A1**

(12)  **EUROPEAN PATENT APPLICATION**

(43) Date of publication:
**10.01.2024 Bulletin 2024/02**

(21) Application number: **23183630.5**

(22) Date of filing: **05.07.2023**

(51) International Patent Classification (IPC):
**G06Q 10/0631** (2023.01)   **G06Q 10/087** (2023.01)
**G06Q 10/04** (2023.01)

(52) Cooperative Patent Classification (CPC):
**G06Q 10/04; G06Q 10/0631; G06Q 10/087**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.07.2022 IN 202221039418**

(71) Applicant: **Tata Consultancy Services Limited
Maharashtra (IN)**

(72) Inventors:
• **SRINIVASAN, RAMAKRISHNAN SUNDARAM
Mason, Ohio, 45040 (US)**
• **SHOREY, RAJEEV
110029 New Delhi, Delhi (IN)**
• **KULKARNI, DEVADATTA MADHUKAR
Rochester Hills, Michigan, 48306 (US)**
• **TEW, JEFFREY DAVID
Rochester Hills, Michigan, 48306 (US)**

(74) Representative: **Goddar, Heinz J.
Boehmert & Boehmert
Anwaltspartnerschaft mbB
Pettenkoferstrasse 22
80336 München (DE)**

(54)  **SYSTEMS AND METHODS FOR MANAGING DECISION SCENARIOS**

(57)   Organizations/manufacturers have used scenarios to make business decisions. It has been difficult to apply scenarios in dealing with tactical opportunities due to lack of integration of changing inputs for consistent decision making. Conventionally, tools are cumbersome and depend on pre-structured and individually validated data requiring significant expert involvement. Present disclosure manages decision scenarios and optimizes total sourcing cost by obtaining various inputs and retrieving decision scenarios from a database. An optimization technique and/or a simulation technique is performed on the decision scenarios to obtain the total sourcing cost that is based on a quantity filled for each source-entity-destination combination and a corresponding unit lane cost. A decision scenario is selected from the pre-defined decision scenarios based on the total sourcing cost and an ordering schedule for associated demands is created accordingly. The selected decision scenario is further fine-tuned such that the total sourcing cost reaches close to a target cost.

FIG. 2

EP 4 303 792 A1

**Description**

CROSS-REFERENCE TO RELATED APPLICATIONS AND PRIORITY

The present application claims priority to Indian application no. 202221039418, filed on July 8, 2022.

TECHNICAL FIELD

The disclosure herein generally relates to decision scenario analysis and, more particularly, to systems and methods for managing decision scenarios for analyzing and optimizing supply chain performance, including sourcing costs.

BACKGROUND

Organizations, and manufacturing units have used various scenarios to explore alternatives as an aid to make business decisions for many years. Despite this history, scenarios have been used mostly for strategic planning, because of the time it takes to create, run, and analyze them. It has been difficult to apply scenarios in dealing with tactical opportunities due to lack of advanced technology to quickly update and integrate changing inputs and to create coordinated shared views for consistent decision making with team buy-in. Conventionally, available tools tend to be cumbersome, and depend on pre-structured and individually validated data requiring significant expert involvement. Further, there is a paucity of tracking and utilizing learning from prior scenario runs at both individual and team levels.

SUMMARY

Embodiments of the present disclosure present technological improvements as solutions to one or more of the above-mentioned technical problems recognized by the inventors in conventional systems.
For example, in one aspect, there is provided a processor implemented method for managing decision scenarios for analyzing and optimizing supply chain performance, including sourcing costs. The method comprises obtaining, via one or more hardware processors, an input comprising a plurality of entities, a plurality of associated demands, a plurality of sources, one or more destinations, and one or more unit lane costs; retrieving, via the one or more hardware processors, one or more pre-defined decision scenarios from a plurality of pre-defined decision scenarios comprised in a database, wherein each of the one or more decision scenarios comprises one or more constraints; performing, based on the input, at least one of an optimization technique, and a simulation technique on the retrieved one or more pre-defined decision scenarios based on the input to obtain a total sourcing cost associated with each of the retrieved one or more pre-defined decision scenarios, wherein the total sourcing cost is obtained based on a quantity filled for each source-entity-destination combination and a corresponding unit lane cost. The optimization technique comprises: creating an objective function based on the input, wherein the objective function corresponds to the one or more unit lane costs and one or more associated decision variables, and wherein the one or more associated decision variables are quantities to be sourced for each source-entity-destination; converting the one or more constraints and the one or more associated decision variables with the plurality of associated demands to a first pre-defined limit and a second pre-defined limit; determining, for each destination-and associated demand, a value for the one or more associated decision variables that satisfy the one or more constraints; and minimizing the objective function based on the determined value of the one or more associated decision variables, wherein the minimized objective function is indicative of a total sourcing cost for each of the retrieved one or more pre-defined decision scenarios.
The simulation technique comprises sorting the plurality of associated demands in at least one order; identifying a set of sources for each sorted associated demand; identifying and sorting a subset of sources with a first predetermined limit amongst the set of sources in a predefined order, wherein the first predetermined limit serves as a constraint from the one or more constraints; performing a comparison of each sorted associated demand with the first predetermined limit of a sorted source from the subset of sources; performing one of fulfilling each sorted associated demand entirely or partially based on the comparison and updating an information corresponding to the plurality of associated demands and the first pre-defined limit; or sorting the set of sources if one or more associated demands from the plurality of associated demands are partially fulfilled; fulfilling each of the one or more associated demands entirely or partially based on a comparison of each of the one or more associated demands with a second predetermined limit, wherein the second predetermined limit serves as another constraint from the one or more constraints; and updating the information corresponding to the plurality of associated demands and the second predetermined limit, wherein upon fulfilling the plurality of associated demands entirely, the total sourcing cost associated with each of the dynamically retrieved one or more pre-defined decision scenarios is obtained.
The method further comprises selecting at least one decision scenario from the retrieved one or more pre-defined decision scenarios as an optimal decision scenario based on the total sourcing cost obtained for each of the retrieved one or more pre-defined decision scenarios by using the at least one of the optimization technique, and the simulation technique; and creating an ordering schedule for the plurality of associated demands based on the at least one selected decision scenario. The ordering schedule comprises the quantity of each entity to be sourced from one or more sources from the plurality of sources to fulfil each of the plurality of associated demands in the plurality of destinations.

The method further comprises selecting at least one scenario from the plurality of pre-defined decision scenarios as a focal scenario based on a comparison of the total sourcing cost of each pre-defined decision scenario and a target cost obtained from a Neural Network AutoRegressive with exogenous input (NNARX) model; determining modification requirements in the focal scenario, wherein the modification requirements correspond to at least one of one or more inputs and one or more constraints; modifying the at least one of the one or more inputs and the one or more constraints based on the modification requirements; deriving a scenario based on the at least one of the one or more modified inputs and the one or more modified constraints; and performing at least one of the optimization technique, and the simulation technique on the derived scenario such that the total sourcing cost reaches a predefined threshold.

In an embodiment, the NNARX model comprises a plurality of layers, wherein an input layer from the plurality of layers is configured with (i) historical values of a total sourcing cost associated with the plurality of pre-defined decision scenarios, and (ii) one or more current and historical exogenous inputs impacting the total sourcing cost comprising one or more of a resource cost, a transportation cost, and one or more macroeconomic indicators; wherein a final output layer from the plurality of layers comprises a neuron representing the target cost, and at least one middle layer that comprises neurons configured to compute nodal weights of the NNARX model with a rectified linear activation function, and wherein each node of the middle layer is connected to one or more nodes of the input layer and to a node of the final output layer.

In another aspect, there is provided a processor implemented system for managing decision scenarios for analyzing and optimizing supply chain performance, including sourcing costs. The system comprises: a memory storing instructions; one or more communication interfaces; and one or more hardware processors coupled to the memory via the one or more communication interfaces, wherein the one or more hardware processors are configured by the instructions to: obtain an input comprising a plurality of entities, a plurality of associated demands, a plurality of sources, one or more destinations, and one or more unit lane costs; retrieve one or more pre-defined decision scenarios from a plurality of pre-defined decision scenarios comprised in a database, wherein each of the one or more decision scenarios comprises one or more constraints; perform, based on the input, at least one of an optimization technique, and a simulation technique on the retrieved one or more pre-defined decision scenarios based on the input to obtain a total sourcing cost associated with each of the retrieved one or more pre-defined decision scenarios, wherein the total sourcing cost is obtained based on a quantity filled for each source-entity-destination combination and a corresponding unit lane cost. The optimization technique comprises: creating an objective function based on the input, wherein the objective function corresponds to the one or more unit lane costs and one or more associated decision variables, and wherein the one or more associated decision variables are quantities to be sourced for each source-entity-destination; converting the one or more constraints and the one or more associated decision variables with the plurality of associated demands to a first pre-defined limit and a second pre-defined limit; determining, for each destination-and associated demand, a value for the one or more associated decision variables that satisfy the one or more constraints; and minimizing the objective function based on the determined value of the one or more associated decision variables, wherein the minimized objective function is indicative of a total sourcing cost for each of the retrieved one or more pre-defined decision scenarios.

The simulation technique comprises sorting the plurality of associated demands in at least one order; identifying a set of sources for each sorted associated demand; identifying and sorting a subset of sources with a first predetermined limit amongst the set of sources in a predefined order, wherein the first predetermined limit serves as a constraint from the one or more constraints. performing a comparison of each sorted associated demand with the first predetermined limit of a sorted source from the subset of sources; performing one of fulfilling each sorted associated demand entirely or partially based on the comparison and updating an information corresponding to the plurality of associated demands and the first predetermined limit; or sorting the set of sources if one or more associated demands from the plurality of associated demands are partially fulfilled; fulfilling each of the one or more associated demands entirely or partially based on a comparison of each of the one or more associated demands with a second predetermined limit, wherein the second predetermined limit serves as another constraint from the one or more constraints; and updating the information corresponding to the plurality of associated demands and the second predetermined, wherein upon fulfilling the plurality of associated demands entirely, the total sourcing cost associated with each of the dynamically retrieved one or more pre-defined decision scenarios is obtained.

The one or more hardware processors are further configured by the instructions to select at least one decision scenario from the retrieved one or more pre-defined decision scenarios as an optimal decision scenario based on the total sourcing cost obtained for each of the retrieved one or more pre-defined decision scenarios by using the at least one of the optimization technique, and the simulation technique; and create an ordering schedule for the plurality of associated demands based on the at least one selected decision scenario. The ordering schedule comprises quantity of each entity to be sourced from one or more sources from the plurality of sources to fulfil each of the plurality of associated demands in the plurality of destinations.

The one or more hardware processors are configured by the instructions to select at least one scenario from the plurality of pre-defined decision scenarios as a focal scenario based on a comparison of the total sourcing cost of each pre-defined decision scenario and a target cost obtained from a Neural Network AutoRegressive with exogenous input (NNARX) model; determining modification requirements in the focal scenario, wherein the modification requirements correspond to at least one of one or more inputs and one or more constraints; modifying the at least one of the one or more inputs and the one or more constraints based on the modification requirements; deriving a scenario based on the at least one of the one or more modified inputs and the one or more modified constraints; and performing at least one of the optimization technique, and the simulation technique on the derived scenario such that the total sourcing cost reaches a predefined threshold.

In an embodiment, the NNARX model comprises a plurality of layers, wherein an input layer from the plurality of layers is configured with (i) historical values of a total sourcing cost associated with the plurality of pre-defined decision scenarios, and (ii) one or more current and historical exogenous inputs impacting the total sourcing cost comprising one or more of a resource cost, a transportation cost, and one or more macroeconomic indicators; wherein a final output layer from the plurality of layers comprises a neuron representing the target cost, and at least one middle layer that comprises neurons configured to compute nodal weights of the NNARX model with a rectified linear activation function, and wherein each node of the middle layer is connected to one or more nodes of the input layer and to a node of the final output layer.

In yet another aspect, there are provided one or more non-transitory machine-readable information storage mediums comprising one or more instructions which when executed by one or more hardware processors cause managing decision scenarios for analyzing and optimizing supply chain performance, including sourcing costs, by obtaining an input comprising a plurality of entities, a plurality of associated demands, a plurality of sources, one or more destinations, and one or more unit lane costs; retrieving one or more pre-defined decision scenarios from a plurality of pre-defined decision scenarios comprised in a database, wherein each of the one or more decision scenarios comprises one or more constraints; performing, based on the input, at least one of an optimization technique, and a simulation technique on the retrieved one or more pre-defined decision scenarios based on the input to obtain a total sourcing cost associated with each of the retrieved one or more pre-defined decision scenarios, wherein the total sourcing cost is obtained based on a quantity filled for each source-entity-destination combination and a corresponding unit lane cost. The optimization technique comprises: creating an objective function based on the input, wherein the objective function corresponds to the one or more unit lane costs and one or more associated decision variables, and wherein the one or more associated decision variables are quantities to be sourced for each source-entity-destination; converting the one or more constraints and the one or more associated decision variables with the plurality of associated demands to a first pre-defined limit and a second pre-defined limit; determining, for each destination-and associated demand, a value for the one or more associated decision variables that satisfy the one or more constraints; and minimizing the objective function based on the determined value of the one or more associated decision variables, wherein the minimized objective function is indicative of the total sourcing cost for each of the retrieved one or more pre-defined decision scenarios.

The simulation technique comprises sorting the plurality of associated demands in at least one order; identifying a set of sources for each sorted associated demand; identifying and sorting a subset of sources with a first predetermined limit amongst the set of sources in a predefined order, wherein the first predetermined limit serves as a constraint from the one or more constraints. performing a comparison of each sorted associated demand with the first predetermined limit of a sorted source from the subset of sources; performing one of fulfilling each sorted associated demand entirely or partially based on the comparison and updating an information corresponding to the plurality of associated demands and the first predetermined limit; or sorting the set of sources if one or more associated demands from the plurality of associated demands are partially fulfilled; fulfilling each of the one or more associated demands entirely or partially based on a comparison of each of the one or more associated demands with a second predetermined limit, wherein the second predetermined limit serves as another constraint from the one or more constraints; and updating the information corresponding to the plurality of associated demands and the second predetermined limit, wherein upon fulfilling the plurality of associated demands entirely, the total sourcing cost associated with each of the dynamically retrieved one or more pre-defined decision scenarios is obtained.

The one or more instructions which when executed by the one or more hardware processors further cause selecting at least one decision scenario from the retrieved one or more pre-defined decision scenarios as an optimal decision scenario based on the total sourcing cost obtained for each of the retrieved one or more pre-defined decision scenarios by using the at least one of the optimization technique, and the simulation technique; and creating an ordering schedule for the plurality of associated demands based on the at least one selected decision scenario. The ordering schedule comprises quantity of each entity to be sourced from one or more sources from the plurality of sources to fulfil each of the plurality of associated demands in the plurality of destinations.

The one or more instructions which when executed by the one or more hardware processors further cause

selecting at least one scenario from the plurality of pre-defined decision scenarios as a focal scenario based on a comparison of the total sourcing cost of each pre-defined decision scenario and a target cost obtained from a Neural Network AutoRegressive with exogenous input (NNARX) model; determining modification requirements in the focal scenario, wherein the modification requirements correspond to at least one of one or more inputs and one or more constraints; modifying the at least one of the one or more inputs and the one or more constraints based on the modification requirements; deriving a scenario based on the at least one of the one or more modified inputs and the one or more modified constraints; and performing at least one of the optimization technique, and the simulation technique on the derived scenario such that the total sourcing cost reaches a predefined threshold.

In an embodiment, the NNARX model comprises a plurality of layers, wherein an input layer from the plurality of layers is configured with (i) historical values of a total sourcing cost associated with the plurality of pre-defined decision scenarios, and (ii) one or more current and historical exogenous inputs impacting the total sourcing cost comprising one or more of a resource cost, a transportation cost, and one or more macroeconomic indicators; wherein a final output layer from the plurality of layers comprises a neuron representing the target cost, and at least one middle layer that comprises neurons configured to compute nodal weights of the NNARX model with a rectified linear activation function, and wherein each node of the middle layer is connected to one or more nodes of the input layer and to a node of the final output layer.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for managing decision scenarios for analyzing and optimizing supply chain performance, including sourcing costs, in accordance with an embodiment of the present disclosure.

FIG. 2 depicts an exemplary flow chart illustrating a method for managing decision scenarios for analyzing and optimizing supply chain performance, including sourcing costs, using the system of FIG. 1, in accordance with an embodiment of the present disclosure.

FIG. 3A depicts an exemplary flow chart illustrating an optimization technique being performed on one or more retrieved pre-defined decision scenarios, using the system of FIG. 1, to obtain a total sourcing cost that is based on a quantity filled for each source-entity-destination combination and a corresponding unit lane cost, in accordance with an embodiment of the present disclosure.

FIG. 3B depicts an exemplary flow chart illustrating a simulation technique being performed on the retrieved one or more pre-defined decision scenarios, using the system of FIG. 1, to obtain the total sourcing cost that is based on the quantity filled for each source-entity-destination combination and the corresponding unit lane cost, in accordance with an embodiment of the present disclosure.

FIG. 4 depicts an exemplary flow chart illustrating a method for deriving a scenario for identifying potential opportunities for further cost reduction, using the system of FIG. 1, in accordance with an embodiment of the present disclosure.

FIG. 5 depicts an exemplary Neural Network AutoRegressive with exogenous input (NNARX) model as implemented by the system of FIG. 1, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As mentioned earlier, various scenarios have been used to explore alternatives as an aid to make business decisions for many years. Despite this history, scenarios have been used mostly for strategic planning, because of the time it takes to create, run, and analyze them. It has been difficult to apply scenarios in dealing with tactical opportunities due to lack of advanced technology to quickly update and integrate changing inputs and to create coordinated shared views for consistent decision making with team buy-in. Conventionally, available tools tend to be cumbersome, and depend on pre-structured and individually validated data requiring significant expert involvement. Further, there is a paucity of tracking and utilizing learning from prior scenario runs at both individual and team levels.

The planning and execution of business decisions are getting increasingly complex due to several interactions and dependencies across the manufacturing and operations ecosystem of products, processes, and partners. The uncertainty in demand and risks in supply further drive the need to manage the changes in inputs and assumptions requiring continuous review and refinement of all decisions. This leads to the central problem of "How can business decisions be accelerated in the face of continuous change?"

Embodiments of the present disclosure provide systems and methods that address the problem of undue time and resources consumption in the manual process of scenario generation and refinement, by leveraging user interactions, providing data-driven and analytics-based guidance, automating select steps in the process, and empowering teams to drive tactical and operational decisions.

To navigate change, businesses need to adopt rapid decision making. The system as described herein for managing scenarios and optimizing total sourcing cost, facilitates options to select alternatives for a set of decision inputs such as relevant data, constraints or (business) rules and to analyze resulting outputs with interactive assessment such as comparison, sensitivity impact, or visual presentations enabling better decisions to be made. This allows confirmation of individual assumptions through interactive scenario runs, and re-evaluation of updated results with a shared view of the assessment. The system 100 enables scenario selection, analysis, and fine-tuning. In scenario-selection, data from historical scenarios is used to select the type of scenarios and related parameters using learning models. For the analysis, the system 100 performs, based on the input, at least one of an optimization technique(s) (also referred as an optimizer and interchangeably used herein), and a simulation technique(s) (also referred as a simulator and interchangeably used herein) to analyze each scenario towards the specified business objective. The outputs from all scenarios are compared, and inputs and constraints for a selected scenario (serving as a focal scenario) may be fine-tuned to reach a decision target of objective value (e.g., target cost). When implemented as a generalized digital solution, the above solution may provide the users or team with a semi-automated solution for accelerated decision-making process. With the method being implemented by the system, it further helps track and store a sequence of scenarios using labels tagged by attributes such as but are not limited to, users, decision focus such as sourcing cost minimization or product revenue maximization, inputs such as unit lane costs and constraint values, and outputs (e.g., total sourcing cost and selected focal scenario). This repository can provide guidance for refining the steps including configuration and fine-tuning.

In a nutshell, the system enables selection of what type of scenarios to run, along with related parameters using learning models. Such selection may be configured via a scenario selector comprised in the system (not shown in FIGS.). Further, the system utilizes analytics methods including combination of qualitative (such as visual comparisons) or quantitative (such as optimization or simulation) to create a solution for each scenario instance for a specified business objective. Such analytics may be configured via a scenario analyzer comprised in the system (not shown in FIGS.). The system further provides a target cost (either a specific number or range around it) as an achievable value for potential objective and further upgrades it using historical data- based analytics methods. Such provision of target cost as potential objective and its improvements may be configured or facilitated via a scenario target planner comprised in the system (not shown in FIGS.). The system further enables comparison of each scenario output to a desired decision target objective value and to select a focal scenario. Such selection of focal scenario may be either automatically performed by the system or by way of user inputs (e.g., a domain expert) or historical data-based inputs. Then the focal scenario's inputs and/or constraints are iteratively modified to reach the target cost/value for the objective using the Scenario Analyzer. Such provision of comparing/analyzing the scenario output with desired target objective value and selection of focal scenario to enable the total sourcing cost reach target cost or at least be near to the target cost may be configured or facilitated via a scenario accelerator comprised in the system (not shown in FIGS.).

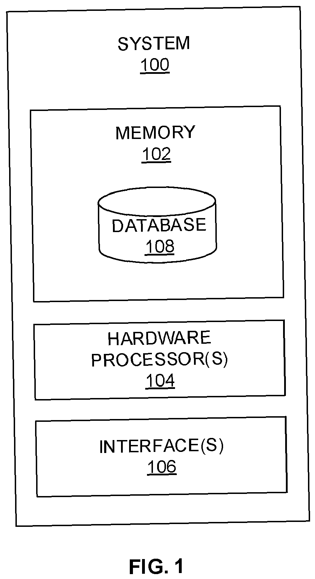

Referring now to the drawings, and more particularly to FIGS. 1 through 5, where similar reference characters denote corresponding features consistently throughout the figures, there are shown preferred embodiments and these embodiments are described in the context of the following exemplary system and/or method.

FIG. 1 depicts an exemplary system 100 for managing decision scenarios for analyzing and optimizing supply chain performance, including sourcing costs, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to a plurality of entities, a plurality of associated demands, a plurality of sources, one or more destinations, and one or more unit lane costs. The database 108 further comprises a plurality of pre-defined decision scenarios, with corresponding attributes such as but are not limited to, users, decision focus (e.g., sourcing cost minimization, product revenue maximization, and the like), policies (e.g., single sourcing or dual sourcing), inputs (e.g., unit lane costs, constraint values, and the like), outputs (e.g., total sourcing cost, selected focal scenario, and the like), one or more optimization technique(s), one or more simulation technique(s), neural network model(s), and the like. Alternatively, the above one or more optimization technique(s), the one or more simulation technique(s), the neural network model(s), and the like may be comprised in the memory 102 and invoked for execution to perform the steps/method of the present disclosure. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

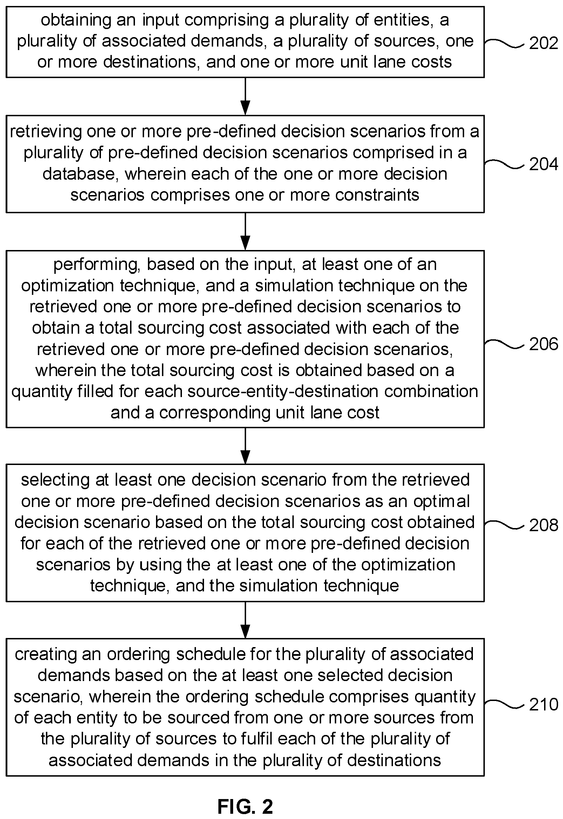

FIG. 2 depicts an exemplary flow chart illustrating a method for managing decision scenarios for analyzing and optimizing supply chain performance, including sourcing costs, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 obtain an input comprising a plurality of entities, a plurality of associated demands, a plurality of sources, one or more destinations, and one or more unit lane costs. In the present disclosure, the one or more entities include, but are not limited to, a part, product or item, a grouping of parts, a particular configuration, and the like. The expression 'part' may also be referred as 'item' and interchangeably used herein. The plurality of associated demands (also referred as demands or demand and may be interchangeably used herein) may include one or more parts associated with one or more machines, and/or other components (e.g., modules including hardware and/or software) and related quantities. The parts, for example, may be corresponding to machine(s) as mentioned above, consumer products, vehicle component(s), manufacturing units, assembly unit(s), and the like. It is to be understood by a person having ordinary skill in the art or person skilled in the art that the above examples of parts shall not be construed as limiting the scope of the present disclosure. The plurality of sources may include but are not limited to, one or more suppliers who can supply one or more parts comprised in the demands. The one or more destinations may include but are not limited to one or more industrial plant(s) (also referred as plant and interchangeably used herein), and the like. The one or more unit lane costs may refer to cost of a part sourcing from a supplier and delivering it to the destination. In other words, lane cost refers to a cost for transport of one unit of part from a particular supplier to a particular plant. Example of associated demand for multiple entities or parts (for MinMaxQty scenario) are illustrated below in Table 1 by way non-limiting examples:

Table 1

| Destination | Category | | | | | |
| | Base | | Mid | | Top | Ultra |
| | Part 1 | Part 2 | Part 4 | Part 5 | Part 8 | Part 11 |
| Plant1 | 50,000 | 80,000 | 40,000 | 40,000 | 120,000 | 80,000 |
| Plant2 | 80,000 | 120,000 | 100,000 | 120,000 | 200,000 | 20,000 |
| Plant3 | 30,000 | 50,000 | 80,000 | 30,000 | 140,000 | 10,000 |

(continued)

| Destination | Category | | | | | |
| --- | --- | --- | --- | --- | --- | --- |
| | Base | | Mid | | Top | Ultra |
| | Part 1 | Part 2 | Part 4 | Part 5 | Part 8 | Part 11 |
| Plant4 | 50,000 | 40,000 | 25,000 | 30,000 | 80,000 | 40,000 |

Unit lane costs are illustrated below in Table 2 by way non-limiting examples:

Table 2

| Destination | Source | Category | | | | | |
| --- | --- | --- | --- | --- | --- | --- | --- |
| | | Base | | Mid | | Top | Ultra |
| | | Part 1 | Part 2 | Part 4 | Part 5 | Part 8 | Part 11 |
| Plant1 | Supplier1 | 980 | 1,000 | 1,160 | 1,180 | 1,380 | 1,100 |
| Plant2 | Supplier1 | 980 | 1,000 | 1,160 | 1,180 | 1,380 | 1,100 |
| Plant3 | Supplier1 | 1,000 | 1,020 | 1,180 | 1,200 | 1,400 | 1,120 |
| Plant4 | Supplier1 | 1,040 | 1,060 | 1,220 | 1,240 | 1,440 | 1,160 |
| Plant1 | Supplier2 | 970 | 1,000 | 1,190 | 1,170 | 1,500 | 1,190 |
| Plant2 | Supplier2 | 1,010 | 1,040 | 1,230 | 1,210 | 1,540 | 1,230 |
| Plant3 | Supplier2 | 940 | 970 | 1,160 | 1,140 | 1,470 | 1,160 |
| Plant4 | Supplier2 | 1,060 | 1,090 | 1,280 | 1,260 | 1,590 | 1,280 |
| Plant1 | Supplier3 | 940 | 1,080 | 1,190 | 1,290 | 1,470 | 1,210 |
| Plant2 | Supplier3 | 930 | 1,070 | 1,180 | 1,280 | 1,460 | 1,200 |
| Plant3 | Supplier3 | 970 | 1,110 | 1,220 | 1,320 | 1,500 | 1,240 |
| Plant4 | Supplier3 | 1,000 | 1,140 | 1,250 | 1,350 | 1,530 | 1,270 |
| Plant1 | Supplier4 | 1,040 | 1,050 | 1,340 | 1,320 | 1,500 | 1,240 |
| Plant2 | Supplier4 | 1,000 | 1,010 | 1,300 | 1,280 | 1,460 | 1,200 |
| Plant3 | Supplier4 | 980 | 990 | 1,280 | 1,260 | 1,440 | 1,180 |
| Plant4 | Supplier4 | 1,000 | 1,010 | 1,300 | 1,280 | 1,460 | 1,200 |

Referring to steps of FIG. 2, at step 204 of the method of the present disclosure, the one or more hardware processors 104 retrieve one or more pre-defined decision scenarios from a plurality of pre-defined decision scenarios comprised in the database 108, wherein each of the one or more decision scenarios comprises one or more constraints. It is to be understood by a person having ordinary skill in the art or person skilled in the art that the one or more pre-defined decision scenarios may be retrieved based on the input. It is to be understood by a person having ordinary skill in the art or person skilled in the art that the one or more pre-defined decision scenarios may be retrieved even without the basis of input. In other words, the retrieval of the one or more pre-defined decision scenarios may be agnostic to the input received in step 202. The plurality of pre-defined decision scenarios comprised in the database 108 include, but are not limited to, (i) Unconstrained Scenario (also referred as Base scenario and interchangeably used herein), (ii) a Minimum and Maximum Delivery Scenario, (iii) a Minimum Delivery and Maximum Spend Scenario, (iv) a Minimum Delivery and Maximum Number of Suppliers Scenario, (v) a Single Source and Maximum Delivery Scenario, and (iv) a Single Source and Maximum Spend Scenario. It is to be understood by a person having ordinary skill in the art or person skilled in the art that the above plurality of pre-defined decision scenarios shall not be construed as limiting the scope of the present disclosure.

Each of the above pre-defined scenarios are better understood by the following exemplary description.
1. **Unconstrained/Base Scenario:** In this scenario, the only constraints are the demands at the plants for specific parts. This is the base scenario.

$X_{ijk}$ - quantity of part (or group of parts) $k$ shipped from supplier $i$ to plant $j$ (decision variables)
$C_{ijk}$ - unit cost for shipping part (or group of parts) $k$ from supplier $i$ to plant
$D_{jk}$ - demand for part (or group of parts) $k$ at plant $j$
The objective is to minimize total sourcing cost

$$\text{Min} \sum_i \sum_j \sum_k X_{ijk} . C_{ijk}$$

Subject to

$$\Sigma_i X_{ijk} \geq D_{jk} \; \forall j, k \quad \text{(Demand constraint)}$$
$$X_{ijk} \geq 0 \; \forall \; i,j,k \quad \text{(Non-negativity constraint)}$$

2. **Minimum and Maximum Delivery Scenario:** In this scenario, in addition to demand, there are constraints on the minimum and maximum delivery quantities.
$X_{ijk}$ - quantity of part (or group of parts) $k$ shipped from supplier $i$ to plant $j$ (decision variables)
$C_{ijk}$ - unit cost for shipping part (or group of parts) $k$ from supplier $i$ to plant $j$
$D_{jk}$ - demand for part (or group of parts) $k$ at plant $j$
$MINQ_{im}$ - minimum quantity of parts in category m to be purchased from supplier $i$
$MAXQ_{im}$ - maximum quantity of parts in category m to be purchased from supplier $i$
The objective is to minimize total sourcing cost

$$\text{Min} \sum_i \sum_j \sum_k X_{ijk} . C_{ijk}$$

Subject to

$$\Sigma_i X_{ijk} \geq D_{jk} \; \forall \; j,k \quad \text{(Demand constraint)}$$
$$\Sigma_j \Sigma_{k \in m} X_{ijk} \leq MAXQ_{im} \; \forall \; i,m \quad \text{(Maximum quantity constraint)}$$
$$\Sigma_j \Sigma_{k \in m} X_{ijk} \geq MINQ_{im} \; \forall \; i,m \quad \text{(Minimum quantity constraint)}$$
$$X_{ijk} \geq 0 \; \forall \; i,j,k \quad \text{(Non-negativity constraint)}$$

3. **Minimum Delivery and Maximum Spend Scenario:** In this scenario, in addition to demand, there are constraints on the minimum delivery quantity and maximum spend.
$X_{ijk}$ - quantity of part (or group of parts) $k$ shipped from supplier $i$ to plant $j$ (decision variables)
$C_{ijk}$ - unit cost for shipping part (or group of parts) $k$ from supplier $i$ to plant $j$
$D_{jk}$ - demand for part (or group of parts) $k$ at plant $j$
$MINQ_{im}$ - minimum quantity of parts in category m to be purchased from supplier $i$
$MAXS_{im}$ - maximum spend limit on parts in category m to be purchased from supplier $i$
The objective is to minimize total sourcing cost

$$\text{Min} \sum_i \sum_j \sum_k X_{ijk} . C_{ijk}$$

Subject to

$$\Sigma_i X_{ijk} \geq D_{jk} \; \forall \; j,k \quad \text{(Demand constraint)}$$
$$\Sigma_j \Sigma_{k \in m} X_{ijk} \cdot C_{ijk} \leq MAXS_{im} \; \forall \; i,m \quad \text{(Maximum spend constraint)}$$
$$\Sigma_j \Sigma_{k \in m} X_{ijk} \geq MINQ_{im} \; \forall \; i,m \quad \text{(Minimum quantity constraint)}$$
$$X_{ijk} \geq 0 \; \forall \; i,j,k \quad \text{(Non-negativity constraint)}$$

4. **Minimum Delivery and Maximum Number of Suppliers Scenario:** In this scenario, in addition to demand, there are constraints on the minimum delivery quantity and maximum number of suppliers.
$X_{ijk}$ - quantity of part (or group of parts) $k$ shipped from supplier $i$ to plant $j$ (decision variables)
$C_{ijk}$ - unit cost for shipping part (or group of parts) $k$ from supplier $i$ to plant $j$

$D_{jk}$ - demand for part (or group of parts) $k$ at plant $j$
$MINQ_{im}$ - minimum quantity of parts in category m to be purchased from supplier $i$
$MAXSUPP_{jk}$ - maximum number of suppliers for part (or group of parts) $k$ to plant $j$
$y_{ijk}$ - a binary variable = 1 if supplier $i$ ships part (or group of parts) $k$ to plant $j$, else = 0
$M$ - a large number such as 1,000,000
The objective is to minimize total sourcing cost

$$\text{Min} \sum_i \sum_j \sum_k X_{ijk} \cdot C_{ijk}$$

Subject to

| | |
|---|---|
| $\Sigma_i\, X_{ijk} \geq D_{jk}\ \forall\ j,k$ | (Demand constraint) |
| $\Sigma_j \Sigma_{k \in m} X_{ijk} \geq MINQ_{im}\ \forall\ i,m$ | (Minimum quantity constraint) |
| $\Sigma_i y_{ijk} \leq MAXSUPP_{jk}\ \forall\ j, k$ | (Maximum suppliers' constraint 1) |
| $X_{ijk} \leq y_{ijk} \cdot M\ \forall\ i,j,k$ | (Maximum suppliers' constraint 2) |
| $y_{ijk} \in \{0,1\}\ \forall\ i,j,k$ | (Binary variable constraint) |
| $X_{ijk} \geq 0\ \forall\ i,j,k$ | (Non-negativity constraint) |

5. **Single Source and Maximum Delivery Scenario:** In this scenario, in addition to demand, there are constraints on having a single supplier for each delivery along with a maximum delivery quantity.
$X_{ijk}$ - quantity of part (or group of parts) $k$ shipped from supplier $i$ to plant $j$ (decision variables)
$C_{ijk}$ - unit cost for shipping part (or group of parts) $k$ from supplier $i$ to plant $j$
$D_{jk}$ - demand for part (or group of parts) $k$ at plant $j$
$MAXQ_{im}$ - maximum quantity of parts in category m to be purchased from supplier $i$
$y_{ijk}$ - a binary variable = 1 if supplier $i$ ships part (or group of parts) $k$ to plant $j$, else = 0
$M$ - a large number such as 1,000,000
The objective is to minimize total sourcing cost

$$\text{Min} \sum_i \sum_j \sum_k X_{ijk} \cdot C_{ijk}$$

Subject to

| | |
|---|---|
| $\Sigma_i X_{ijk} \geq D_{jk}\ \forall\ j,k$ | (Demand constraint) |
| $\Sigma_j \Sigma_{k \in m} X_{ijk} \leq MAXQ_{im}\ \forall\ i,m$ | (Maximum quantity constraint) |
| $\Sigma_i y_{ijk} \leq 1\ \forall\ j, k$ | (Single source constraint 1) |
| $X_{ijk} \leq y_{ijk} \cdot M\ \forall\ i,j, k$ | (Single source constraint 2) |
| $y_{ijk} \in \{0,1\}\ \forall\ i,j,k$ | (Binary variable constraint) |
| $X_{ijk} \geq 0\ \forall\ i,j,k$ | (Non-negativity constraint) |

6. **Single Source and Maximum Spend Scenario:** In this scenario, in addition to demand, there are constraints on having a single supplier for each delivery along with a maximum spend limit.
$X_{ijk}$ - quantity of part (or group of parts) $k$ shipped from supplier $i$ to plant $j$ (decision variables)
$C_{ijk}$ - unit cost for shipping part (or group of parts) $k$ from supplier $i$ to plant $j$
$D_{jk}$ - demand for part (or group of parts) $k$ at plant $j$
$MAXS_{im}$ - maximum spend limit on parts in category m to be purchased from supplier $i$ $y_{ijk}$ - a binary variable = 1 if supplier $i$ ships part (or group of parts) $k$ to plant $j$, else = 0
M - a large number such as 1,000,000
The objective is to minimize total sourcing cost

$$\text{Min} \sum_i \sum_j \sum_k X_{ijk} \cdot C_{ijk}$$

Subject to

$$\Sigma_i X_{ijk} \geq D_{jk} \; \forall \; j,k \qquad \text{(Demand constraint)}$$
$$\Sigma_j \Sigma_{k \in m} X_{ijk} \cdot C_{ijk} \leq MAXS_{im} \; \forall \; i,m \qquad \text{(Maximum spend constraint)}$$
$$\Sigma_i \; y_{ijk} \leq 1 \; \forall \; j, \; k \qquad \text{(Single source constraint 1)}$$
$$X_{ijk} \leq y_{ijk} \cdot M \; \forall \; i,j, \; k \qquad \text{(Single source constraint 2)}$$
$$y_{ijk} \in \{0,1\} \; \forall \; i,j,k \qquad \text{(Binary variable constraint)}$$
$$X_{ijk} \geq 0 \; \forall \; i,j,k \qquad \text{(Non-negativity constraint)}$$

Below illustrated is a description on how at least some of the above scenarios are formed/pre-defined by the system 100 of the present disclosure. For the sake of brevity and for better understanding of the embodiments of the present disclosure only a few scenarios formation is shown by the system 100. It is to be understood by a person having ordinary skill in the art that such examples of defining/forming scenarios shall not be construed as limiting the scope of the present disclosure. The above pre-defined decision scenarios may be referred from US application number US 17/524,220, filed on November 11, 2021.

Scenarios explore different combinations of inputs and the corresponding output(s). For the sourcing cost minimization problem, the various inputs comprise source entities (suppliers), destinations (plants, or production units, or manufacturing units, and the like), entities (e.g., parts or group of parts) with corresponding demands, cost to supply one unit of a given part or group of parts for a given source and destination, minimum/maximum limits on delivery quantity, minimum/maximum limits on spend, minimum/maximum number of suppliers, and the like. A scenario is formed by selecting and combining a specific subset of the above-mentioned inputs, in one example embodiment. Some of the inputs are required in every scenario (e.g., sources, destinations, demands, and the like), while some are optional combinations (e.g., minimum delivery quantity and maximum Spend). In general, as the number of inputs and the combinations increase, the total sourcing cost may tend to increase.

Below outlined is an example of an approach to structure selection of some of the pre-defined scenarios:

Step 1: **Unconstrained Scenario** sizes the total opportunity based upon supplier quotes for sourcing.

Step 2: **Minimum Delivery Maximum Delivery Scenario** (also referred as MinMaxQty and interchangeably used herein) analyzes competitiveness for individual suppliers for minimum and maximum capacities offered by suppliers. The volume allocation and associated spend of the scenario further clarifies whether the available capacities can cover the demand mix and further at what cost across parts.

The negotiations between (or across) entities (or business entities such as suppliers, manufacturers, consumers, and the like) further need to consider supplier performance record and cost structures to explore what suppliers can be grown in terms of adding volume or spend, or that need to be fixed by controlling spend or capacity, or further possibly exit by reducing volume and spend.

**Minimum Delivery Maximum Delivery Scenario** can be further utilized by varying bounds, for example, Maximum delivery down for Exit suppliers, or Minimum delivery up for Grow suppliers, to analyze impact on total sourcing cost in terms of competitive cost that suppliers can offer.

Step 3: **Minimum Delivery Maximum Spend Scenario** (also referred as MinQtyMaxSpend and interchangeably used herein) runs by varying delivery or spend bounds can further analyze balance of volume and cost across allocations for improving opportunities across the "Grow/Fix/Exit Plan". Once optimal solutions (e.g., optimal solution refers to spend and volume allocation mix across suppliers) are compared this can drive negotiations between (or across) entities (or business entities such as suppliers, manufacturers, consumers, and the like) with better understanding of opportunities for reducing total sourcing cost and managing "Grow/Fix/Exit Plan". In other words, each of these solutions such as spend across supplier(s), and volume allocation mix across suppliers are compared to determine which of these are providing optimal results with respect to one or more strategies such as growth, fix, exit plans, etc.

As mentioned above, the one or more constraints comprises at least one of demand, maximum quantity of parts, minimum quantity of parts, maximum spend, and number of suppliers. It is further to be understood by a person having ordinary skill in the art that the above pre-defined scenarios shall not be construed as limiting the scope of the present disclosure. In other words, there could be other scenarios accounted and defined in real-time/near real-time or well in advance depending upon the requirement (e.g., based on the input request from customers/users).

Referring to steps of FIG. 2, at step 206 of the method of the present disclosure, the one or more hardware processors 104 perform, based on the input, at least one of an optimization technique, and a simulation technique on the retrieved one or more pre-defined decision scenarios based on the input to obtain a total sourcing cost associated with each of the retrieved one or more pre-defined decision scenarios. The total sourcing cost is obtained based on a quantity filled for each source-entity-destination combination and a corresponding unit lane cost.

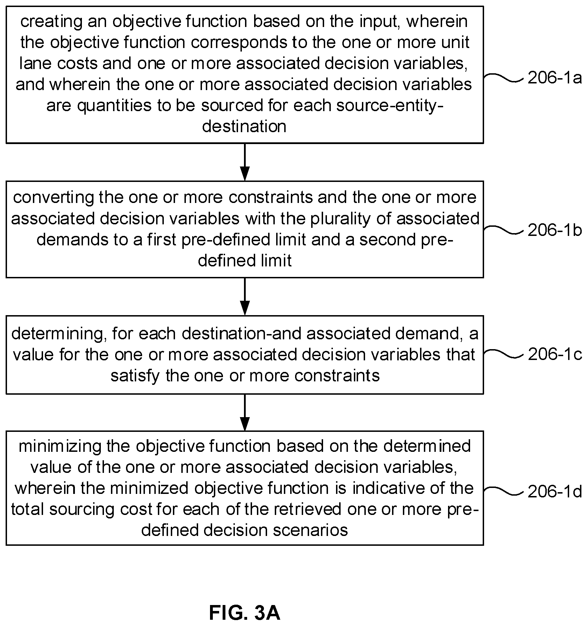

The optimization technique comprises of one or more steps for obtaining the total sourcing cost associated with each of the retrieved one or more pre-defined decision scenarios. More specifically, the optimization technique comprises creating an objective function based on the input at step 206-1a. The objective function corresponds to the one or more unit lane costs and one or more associated decision variables. The one or more associated decision variables are quantities to be sourced for each source-entity-destination. Further, at step 206-1b the one or more constraints and the one or more associated decision variables with the plurality of associated demands are converted to a first pre-defined limit and a second pre-defined limit. Furthermore, for each destination-and associated demand, a value for the one or more associated decision variables that satisfy the one or more constraints is determined at step 206-1c. Based on the determined value of the one or more associated decision variables the objective function is minimized at step 206-1d. The minimized objective function is indicative of a total sourcing cost for each of the retrieved one or more pre-defined decision scenarios. The steps 206-1a through 206-1d are depicted in flow diagram of FIG. 3A. More specifically, FIG. 3A, with reference to FIGS. 1 through 2, depicts an exemplary flow chart illustrating the optimization technique being performed on the retrieved one or more pre-defined decision scenarios, using the system of FIG. 1, to obtain the total sourcing cost that is based on a quantity filled for each source-entity-destination combination and a corresponding unit lane cost, in accordance with an embodiment of the present disclosure. The above steps of the optimization technique 206-1a through 206-1d are better understood by way of following description:

Consider that the system 100 has the goal of minimize the total sourcing cost, wherein the system 100 has retrieved three scenarios namely: (i) Unconstrained Scenario (also referred as Base scenario and interchangeably used herein), (ii) a Minimum and Maximum Delivery Scenario (also referred as MinMaxQty and interchangeably used herein), and (iii) a Minimum Delivery and Maximum Spend Scenario (also referred as MinQtyMaxSpend and interchangeably used herein). The optimization technique is performed and shown for the Minimum and Maximum Delivery Scenario. Such example shall not be construed as limiting the scope of the present disclosure. An optimization problem may be setup based on the selected (business) objective and one or more constraints (as mentioned above). The problem may be setup by the system 100 wherein the problem depicts various suppliers being connected to one or more plants with additional inputs such as but are not limited to, parts, costs, associated demands, associated constraints, associated policies such as single sourcing, dual (or multiple) sourcing, and the like. One example for minimizing the total sourcing cost, with minimum and maximum quantity limits from select suppliers is shown below:

Mathematical form: (supplier = source, plant = destination, item = part = entity)

$X_{ijk}$ - quantity of item $k$ shipped from supplier $i$ to plant $j$ (Decision variables)
$C_{ijk}$ - cost for shipping item $k$ from supplier $i$ to plant $j$ (Objective function coefficients)
$D_{jk}$ - demand for item $k$ at plant $j$
$MINQ_{im}$ - minimum quantity of parts in category m to be purchased from supplier $i$
$MAXQ_{im}$ - maximum quantity of parts in category m to be purchased from supplier $i$

The objective is to minimize total sourcing cost

$$\text{Min} \sum_i \sum_j \sum_k X_{ijk} * C_{ijk}$$

Subject to

| | |
|---|---|
| $\Sigma_i X_{ijk} \geq D_{jk} \ \forall \ j,k$ | (Demand constraint) |
| $\Sigma_j \Sigma_{k \in m} X_{ijk} \leq MAXQ_{im} \ \forall \ i,m$ | (Max quantity constraint) |
| $\Sigma_j \Sigma_{k \in m} X_{ijk} \geq MINQ_{im} \ \forall \ i,m$ | (Min quantity constraint) |
| $X_{ijk} \geq 0 \ \forall \ i,j,k$ | (Non-negativity constraint) |

The output $X_{ijk}$ values may be used to calculate the total sourcing cost for the selected scenario, which can be compared with the total sourcing costs from other scenarios.

The objective function is the total sourcing cost, created as the sumproduct of the lane costs ($C_{ijk}$) and the decision variables ($X_{ijk}$).

Total Sourcing Cost = $980X_{111}$+ $980X_{121}$.... + $1{,}200X_{446}$.

In this example there are 96 decision variables (4 sources x 4 destinations x 6 entities). These can be shown also as x1-x96 as illustrated below.

$$x1 = X_{111}, x2 = X_{121, ...} x96 = X_{446}$$

The one or more constraints and the one or more associated decision variables with the plurality of associated demands are transformed into a first pre-defined limit and a second pre-defined limit (e.g., first MinQty and MaxQty constraints) as shown in below Table 3 by way non-limiting examples.

Table 3

| x1 | x2 | x3 | ... | x28 | Relation | Value |
|----|----|----|-----|-----|----------|-------|
| 1 | 1 | 1 | ... | 0 | >= | 50000 |
| 0 | 0 | 0 | ... | 1 | <= | 300000 |

The first row shows sample constraint coefficients for the MinQty of 50,000 for Base category parts from Supplier 1. Note that only the coefficients corresponding the Supplier1 and all parts in the Base category are equal to 1 (coefficients corresponding to x1 - x4 and x17 - x20) and all other coefficients are 0. This input is converted into a sumproduct of these coefficients and the corresponding decision variables to form a constraint inequality (>= because it is a MinQty). Similarly, sample constraint coefficients for the MaxQty constraint (<=) corresponding to Base category parts from Supplier 3 are shown in the 2nd row above. The MinQty limits of 0 and MaxQty limits of infinity are not modeled as they are redundant, given the non-negativity constraint.

Values of decision variables obtained (from an optimizer - comprised in the memory 102). Results from the optimizer for this scenario are shown below (for Base category only) in Table 4 by way non-limiting examples. The total sourcing cost is $1.962 Bn.

Table 4

| Variable | Source | Destination | Entity | Category | Lane Cost | Order Qty |
|----------|--------|-------------|--------|----------|-----------|-----------|
| x7 | Supplier2 | Plant3 | P1 | Base | 940 | 30000 |
| x9 | Supplier3 | Plant1 | P1 | Base | 940 | 50000 |
| X10 | Supplier3 | Plant2 | P1 | Base | 930 | 80000 |
| x12 | Supplier3 | Plant4 | P1 | Base | 1000 | 50000 |
| x17 | Supplier1 | Plant1 | P2 | Base | 1000 | 80000 |
| x18 | Supplier1 | Plant2 | P2 | Base | 1000 | 120000 |
| x23 | Supplier2 | Plant3 | P2 | Base | 970 | 50000 |
| x32 | Supplier4 | Plant4 | P2 | Base | 1010 | 40000 |

Note that Supplier1 supplies a total of 200,000 > 50,000 (MinQty) and Supplier3 supplies a total of 180,000 < 300,000 (MaxQty).

Optimum Total sourcing cost (also referred as total sourcing cost) for all 3 scenarios is shown in below Table 5 by way non-limiting examples:

Table 5

| Scenarios | Total sourcing Cost (Billion USD) |
|-----------|-----------------------------------|
| Base | 1.9544 |
| MinMaxQty | 1.9621 |
| MinQtyMaxSpend | 1.9853 |

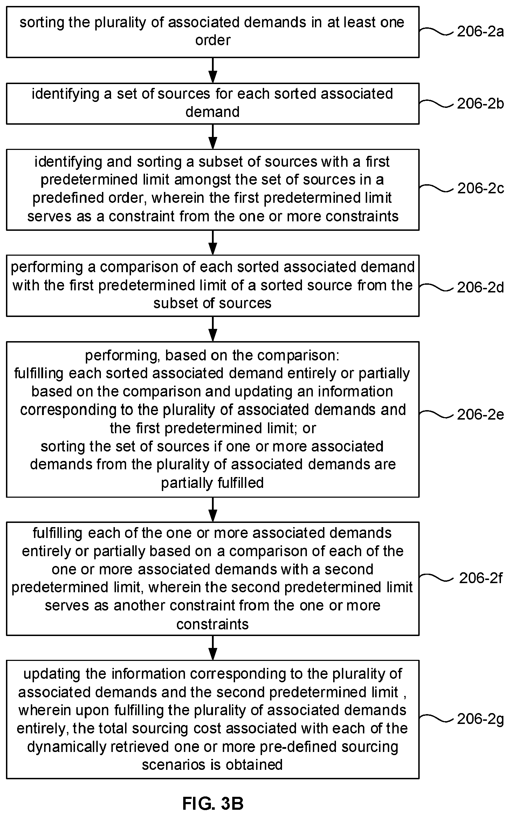

Referring to steps of FIG. 2, the simulation technique comprises of one or more steps for obtaining the total sourcing cost associated with each of the retrieved one or more pre-defined decision scenarios. More specifically, the simulation technique comprises sorting the plurality of associated demands in at least one order at step 206-2a. At step 206-2b, a set of sources for each sorted associated demand is identified. At step 206-2c, a subset of sources with a first predetermined limit (MinQty) amongst the set of sources is identified and sorted in a predefined order. In an example embodiment of the present disclosure, the set of sources are identified and sorted based on one or more performance metrics comprising, but are not limited to, cost, a product mix relative to volume mix based on capacity and demand of the plant, and the like. The first predetermined limit serves as a constraint from the one or more constraints, in an example embodiment of the present disclosure. At step 206-2d, a comparison of each sorted associated demand with the first predetermined limit (MinQty) of a sorted source from the subset of sources is performed. At step 206-2e, the system 100 either fulfills each sorted associated demand entirely or partially based on the comparison and updates an information corresponding to the plurality of associated demands and the first predetermined limit; or sorts the set of sources if one or more associated demands from the plurality of associated demands are partially fulfilled. In an example embodiment of the present disclosure, the sorting of the set of sources is based on the one or more performance metrics as mentioned above. At step 206-2f, based on the outcome of the step 206-2e, each of the one or more associated demands entirely or partially is fulfilled based on a comparison of each of the one or more associated demands with a second predetermined limit (MaxQty). The second predetermined limit serves as another constraint from the one or more constraints. In the present disclosure, the first pre-defined limit and the first predetermined limit may be referred as a first limit and interchangeably used herein. In the present disclosure, the second pre-defined limit and the second predetermined limit may be referred as a second limit and interchangeably used herein. At step 206-2g, the information corresponding to the plurality of associated demands and the second predetermined limit (MaxQty) are updated. Upon fulfilling the plurality of associated demands entirely, the total sourcing cost associated with each of the dynamically retrieved one or more pre-defined sourcing scenarios is obtained. The steps 206-2a through 206-2g are depicted in flow diagram of FIG. 3B. More specifically, FIG. 3B, with reference to FIGS. 1 through 3A, depicts an exemplary flow chart illustrating the simulation technique being performed on the retrieved one or more pre-defined decision scenarios, using the system of FIG. 1, to obtain the total sourcing cost that is based on the quantity filled for each source-entity-destination combination and the corresponding unit lane cost, in accordance with an embodiment of the present disclosure. The above steps of the simulation technique 206-2a through 206-2g are better understood by way of following description:

Consider that the system 100 has the goal of minimize the total sourcing cost, wherein the system 100 has retrieved the same three scenarios namely: (i) Unconstrained Scenario (also referred as Base scenario and interchangeably used herein), (ii) a Minimum and Maximum Delivery Scenario, and (iii) a Minimum Delivery and Maximum Spend Scenario as retrieved for the optimization technique.

The demands shown in Table 1 are sorted in descending order (e.g., the least one order). The first 10 demands are shown below in Table 6 by way non-limiting examples:

Table 6

| Destination | Entity | Category | Demand |
|---|---|---|---|
| Plant2 | P8 | Top | 200,000 |
| Plant3 | P8 | Top | 140,000 |
| Plant2 | P2 | Base | 120,000 |
| Plant2 | P5 | Mid | 120,000 |
| Plant1 | P8 | Top | 120,000 |
| Plant2 | P4 | Mid | 100,000 |
| Plant2 | P1 | Base | 80,000 |
| Plant1 | P2 | Base | 80,000 |
| Plant3 | P4 | Mid | 80,000 |
| Plant4 | P8 | Top | 80,000 |

For each demand, one or more sources are identified. So, for the first demand in the list 200,000 units of P8 (in Top category) at Plant2, the sources are Supplier1, Supplier2, Supplier3, and Supplier4. Of these, ones with MinQty limit>0 (for corresponding category) are identified/selected and sorted in a pre-defined order (e.g., an ascending order). This sorted supplier subset is Supplier1 (MinQty = 50,000) and Supplier2 (MinQty = 50,000) for the top category. Further, the demand is compared to the first sorted supplier's MinQty and as much of the demand is fulfilled. So Plant2 gets 50,000 units of P8 from Supplier!. The MinQty (e.g., the first predetermined limit) and demand quantity which are the constrained are updated. So, the MinQty for Supplier! (Top) is now 0, and demand quantity is 150,000, and the demand is partially fulfilled. Hence, the system 100 or the simulation technique checks on Supplier2 and fills 50,000 units corresponding to its MinQty, and it was observed that after update demand = 100,000 and MinQty = 0, there was still a partially fulfilled demand. Now to fill the remaining 100,000, all suppliers are sorted in ascending order of cost as below in Table 7 by way non-limiting examples:

Table 7

| Source | Lane Cost |
|---|---|
| Supplier1 | 1380 |
| Supplier2 | 1540 |
| Supplier4 | 1460 |
| Supplier3 | 1460 |

Since the least cost is from Supplier!, it is checked by the system 100 if there is a MaxQty limit (e.g., the second predetermined limit). Since there is none, the 100,000 units of demand are filled from Supplier!. The information corresponding to the plurality of associated demands and the second predetermined limit (MaxQty) is updated. After update, demand = 0. Now the demand is completely fulfilled, with 150,000 from Supplier! and 50,000 from Supplier2. Note that if it were not for the MinQty constraint, the entire demand will be filled from Supplier! as it is having the least cost.

If any supplier has a MaxQty (say 50,000), then demand will be filled upto MaxQty, and after updating the demand and MaxQty similar to above, the system 100 goes to the next supplier with lowest cost. After going through the entire list of demands, total sourcing cost is calculated by multiplying the corresponding (non-zero) quantities in each lane by the corresponding lane cost and summing all these values. This comes to $1.9766 Bn. Such total sourcing cost computation/estimation method shall not be construed as limiting the scope of the present disclosure. In other words, the system and method of the present disclosure may implement other cost computation methods as known in the art or empirically determined method for obtaining the total sourcing cost. This total sourcing cost is compared to an optimal sourcing cost of $1.9621 Bn based on which this is considered a feasible solution.

Similarly, for other decision scenarios, total sourcing cost is also obtained. This provides a metric to compare the different decision scenarios. As shown in the table below (repeated from optimization technique), the MinMaxQty scenario has the lowest cost. The total sourcing cost from the simulation technique, for all 3 decision scenarios considered as examples is shown in below Table 8 by way non-limiting examples:

Table 8

| Scenarios | Total sourcing cost (Billion USD) |
|---|---|
| Base | 1.9544 |
| MinMaxQty | 1.9621 |
| MinQtyMaxSpend | 1.9853 |

Referring to steps of FIG. 2, at step 208 of the method of the present disclosure, the one or more hardware processors 104 select at least one decision scenario from the retrieved one or more pre-defined decision scenarios as an optimal decision scenario based on the total sourcing cost obtained for each of the retrieved one or more pre-defined decision scenarios by using the optimization technique, and/or the simulation technique. So, the MinMaxQty scenario is selected in this case by the present disclosure to determine the ordering schedule. (Base or the unconstrained scenario is not considered as it has no supply constraints and is only a reference scenario for the others).

At step 210 of the method of the present disclosure, the one or more hardware processors 104 create an ordering schedule for the plurality of associated demands based on the at least one selected decision scenario. The ordering schedule comprises quantity of each entity to be sourced from one or more sources from the plurality of sources to fulfil each of the plurality of associated demands in the plurality of destinations. Below Table 9 illustrates the ordering scheduling for the selected decision scenario by way non-limiting examples:

Table 9

| Source | Destination | Entity | Category | Lane Cost | Order Quantity |
|---|---|---|---|---|---|
| Supplier1 | Plant1 | P1 | Base | 980 | 0 |
| Supplier1 | Plant2 | P1 | Base | 980 | 0 |

(continued)

| Source | Destination | Entity | Category | Lane Cost | Order Quantity |
|---|---|---|---|---|---|
| Supplier1 | Plant3 | P1 | Base | 1000 | 0 |
| Supplier1 | Plant4 | P1 | Base | 1040 | 0 |
| Supplier2 | Detroit | P1 | Base | 970 | 0 |
| Supplier2 | Plant1 | P1 | Base | 1010 | 0 |
| Supplier2 | Plant2 | P1 | Base | 940 | 30000 |
| Supplier2 | Plant3 | P1 | Base | 1060 | 0 |
| Supplier3 | Plant4 | P1 | Base | 940 | 50000 |
| Supplier3 | Detroit | P1 | Base | 930 | 80000 |
| Supplier3 | Plant1 | P1 | Base | 970 | 0 |
| Supplier3 | Plant2 | P1 | Base | 1000 | 50000 |

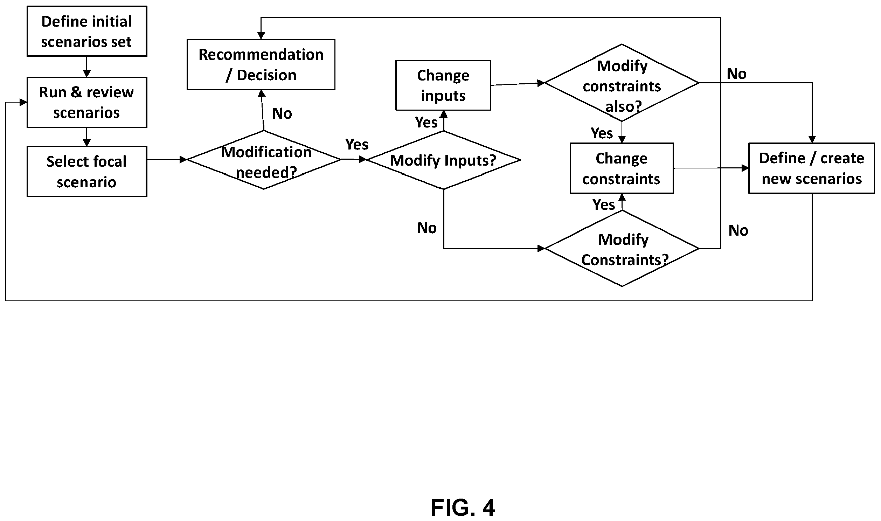

Once the total sourcing cost is obtained for all retrieved decision scenarios, the system 100 selects a scenario with the closest total sourcing cost to a target cost and identifies potential opportunities for further cost reduction. FIG. 4, with reference to FIGS. 1 through 3B, depicts an exemplary flow chart illustrating a method for deriving a scenario for identifying potential opportunities for further cost reduction, using the system 100 of FIG. 1, in accordance with an embodiment of the present disclosure. The method for identifying potential opportunities for further cost reduction includes selecting at least one scenario from the plurality of pre-defined decision scenarios as a focal scenario based on a comparison of the total sourcing cost of each pre-defined decision scenario and a target cost obtained from a Neural Network AutoRegressive with exogenous input (NNARX) model. The comparison enables the system 100 to determine one or more modification requirements in the focal scenario. The one or more modification requirements correspond to at least one of one or more inputs and one or more constraints. Based on the determined modification requirements, the at least one of the one or more inputs and the one or more constraints are modified. Based on the modified inputs and/or constraints, the system 100 derives a scenario. The scenario may be the same scenario identified as the focal scenario. The scenario derived may be a sub-scenario or a derivative of the focal scenario selected. One the scenario is derived, the system 100 performs the optimization technique and/or the simulation technique on the derived scenario such that the total sourcing cost reaches a predefined threshold. The optimization technique and/or the simulation technique may be iteratively performed until the total sourcing cost reaches the predefined threshold or the maximum number of iterations is reached (wherein the maximum number of iterations is either pre-configured or empirically determined during the execution of the method described herein). For example, in one instance the total sourcing cost reaches the target cost. In another instance, the total sourcing cost is less than the target cost (but has a closer value). In such scenarios, the predefined threshold is either the target cost value or the closer value achieved by the total sourcing cost. The above steps for identifying potential opportunities for further cost reduction may be better understood by way of following description:

For the purposes of the present disclosure and for the sake of brevity and better understanding of the embodiments described herein, the same three scenarios used for performing the optimization technique and the simulation technique are considered, with their total sourcing costs along with a predicted target sourcing cost of $1,955,940,000 USD. A focal scenario is selected based on the smallest difference from the target value (or the target cost). The total sourcing cost for the Base scenario generally may be slightly lower than the target cost, since it comprises an ideal scenario that is used to provide a reference point. In the experiments conducted by the present disclosure, the system 100 selected the MinMaxQty scenario as the focal scenario as shown below (refer bold text below - 6,160,000) in Table 10 by way non-limiting examples:

Table 10

| Scenario Name | Objective Value | Target | Difference | Units |
|---|---|---|---|---|
| Base | 1,954,400,000 | 1,955,940,000 | | USD |
| MinMaxQty | 1,962,100,000 | 1,955,940,000 | **6,160,000** | USD |
| MinQtyMaxSpend | 1,985,272,935 | 1,955,940,000 | 29,332,935 | USD |

Once the focal scenario is selected/identified, the system 100 attempts to reduce the total sourcing cost further (towards the target cost) by modifying the inputs and/or constraints. In this case, the higher cost of the focal scenario could be a result of (i) using a supplier with higher unit cost, or (ii) being forced to pick a different supplier due to constraints like MinQty. In order to pinpoint these differences, the output of the focal scenario is compared to the Base scenario, as shown below in Table 11 by way non-limiting examples.

Table 11

| variable | source | destination | entity | Lane cost | Base supply_qty | Base total_value | Focal supply_qty | Focal total_value |
|---|---|---|---|---|---|---|---|---|
| x1 | Supplier1 | Plant1 | P1 | 980 | 0 | 0 | 0 | 0 |
| x2 | Supplier1 | Plant2 | P1 | 980 | 0 | 0 | 0 | 0 |
| x3 | Supplier1 | Plant3 | P1 | 1000 | 0 | 0 | 0 | 0 |
| x4 | Supplier1 | Plant4 | P1 | 1040 | 0 | 0 | 0 | 0 |
| x5 | Supplier2 | Plant1 | P1 | 970 | 0 | 0 | 0 | 0 |
| x6 | Supplier2 | Plant2 | P1 | 1010 | 0 | 0 | 0 | 0 |
| x7 | Supplier2 | Plant3 | P1 | 940 | 30000 | 28200000 | 30000 | 28200000 |

| x8 | Supplier2 | Plant4 | P1 | 1060 | 0 | 0 | 0 | 0 |
|----|-----------|--------|----|------|---|---|---|---|
| x9 | Supplier3 | Plant1 | P1 | 940 | 50000 | 47000000 | 50000 | 47000000 |
| x10 | Supplier3 | Plant2 | P1 | 930 | 80000 | 74400000 | 80000 | 74400000 |

The system 100 compares the output of each decision variable (supply_qty) in the focal scenarion to the corresponding output from the Base scenario, and highlights the differences as potential for improvements, as shown below:

Target cost = 1957500000

Value tolerance (%) = 0.2

The focal scenario is = MinMaxQty

Total sourcing cost for Focal scenario = 1962100000

Percent Difference between the total sourcing cost of the focal scenario and Target Cost = 0.23499361430395915

Potential improvements:

Part , Destination, BaseSource, BaseSupplyQty, BaseUnitCost, FocalSource, FocalSupplyQty, FocalUnitCost, UnitCostDiff, TotalCostDiff

P4, Plant2, Supplier1, 100000.0, 1160, Supplier1, 50000.0, 1160,0,0.0

P4, Plant2, Supplier1, 100000.0, 1160, Supplier3, 50000.0, 1180,20,1000000.0

P4, Plant4, Supplier1, 25000.0, 1220, Supplier1, 15000.0,1220,0,0.0

P4, Plant4, Supplier1, 25000.0, 1220, Supplier4, 10000.0,1300,80,800000.0

P5, Plant4, Supplier1, 30000.0, 1240, Supplier4, 30000.0,1280,40,1200000.0

P8, Plant3, Supplier1, 140000.0, 1400, Supplier1, 90000.0,1400,0,0.0

P8, Plant3, Supplier1, 140000.0, 1400, Supplier2, 50000.0,1470,70,3500000.0

P11, Plant4, Supplier1, 40000.0,1160, Supplier1, 10000.0,1160,0,0.0

P11, Plant4, Supplier1, 40000.0,1160, Supplier1, 30000.0,1200,40,1200000.0

The above improvements can be shown for the demand at Plant2 for P4 as depicted in Table 12 below by way non-limiting examples:

Table 12

| variable | source | destination | entity | lane cost | Base supply_ qty | Base total_va lue | Focal supply_ qty | Focal total_va lue |
|---|---|---|---|---|---|---|---|---|
| x34 | Suppli er1 | Plant2 | P4 | 11 60 | 100000 | 1160000 00 | 50000 | 5800000 0 |
| x38 | Suppli er2 | Plant2 | P4 | 12 30 | 0 | 0 | 0 | 0 |
| x42 | Suppli er3 | Plant2 | P4 | 11 80 | 0 | 0 | 50000 | 5900000 0 |
| x46 | Suppli er4 | Plant2 | P4 | 13 00 | 0 | 0 | 0 | 0 |

The first row shows that in the Base scenario, this entire 100K demand was sourced from the least cost supplier, Supplier1. However, in the focal scenario, only 50K was sourced from Supplier1, and the remaining 50K was sourced from a different supplier - Supplier3 - for a $20 higher unit cost. The reason is that there is a 50K MinQty requirement from Supplier3. If the quantity sourced from Supplier1 can be increased there is a potential for getting closer to the target cost with potential cost reduction of (20*50,000) = $ 1Mn.

With this information, the system 100 enables a provision or provides a recommendation for negotiating with Supplier3 to reduce their sourcing cost closer to the Base (reference) cost of $1160 OR to reduce their MinQty requirement. Either option or a suitable combination helps reduce the cost. Once the new inputs are determined, a new scenario can be constructed and run through system 100 to reduce the total sourcing cost further towards the target cost. Below is an example for better understanding of the above description:

Example: Assuming lower unit cost is obtained for P4 from Supplier3 to Plant2, where the new cost is $1170 instead of $1180. Table 13 depicts an exemplary cost estimate before and after the method of FIGS. 2 through 4 is executed.

Table 13

| Before | | | | |
|---|---|---|---|---|
| Source | Destination | Entity | Category | Lane Cost |
| Supplier3 | Plant2 | P4 | Mid | 1180 |

After:

| Source | Destination | Entity | Category | Lane Cost |
|---|---|---|---|---|
| Supplier3 | Plant2 | P4 | Mid | 1170 |

The re-optimization yields the following result:
The new optimal total sourcing cost is 1,961,600,000 USD. This new optimal total sourcing cost is closer to the target cost of 1,957,500,000 USD than the focal scenario's total sourcing cost 1962100000 USD. However, since the target cost is not yet reached, the system 100 prompts if more iterations are needed. The iteration and method for reducing the total sourcing cost and for identifying potential improvements as mentioned above is depicted in FIG. 4. FIG. 4 and the above description may be further better understood by the following:

Each of the decision scenarios may be processed through the system 100, and the total sourcing cost metric may be calculated for each decision scenario accordingly. These collected metrics may be compared to the target cost. Total sourcing cost for the Base scenario generally will be slightly lower than the target cost, since it comprises an ideal scenario that is used to provide a reference point. One of the initial scenarios (other than Base scenario) may be selected for recommendation or further refinement. This selection may be rule-driven, where the rule may comprise "Select the scenario with the least total sourcing cost difference with respect to the target cost." The selected scenario is usually called the focal scenario. If the focal scenario's total sourcing cost is lower than the target cost, no further refinement may be needed. The system 100 may recommend this as the preferred scenario to the decision makers for negotiating with suppliers. If the focal scenario's total sourcing cost exceeds the target cost and the pre-defined tolerance, further refinement may be needed. The refinement may be done by modifying the inputs or constraints. The need for modification comes from comparing the focal scenario's recommended quantities by category with the Base scenarios' recommended quantities. Since the Base scenario provides the ideal scenario, where each demand is sourced from the least cost supplier, any deviation from this case may merit closer scrutiny. These differences are listed as potential improvement opportunities along with calculated cost of improvement. After obtaining new cost or constraints data, the optimization and/or simulation may be performed and result is compared to the target cost. This process may be repeated till the target cost is reached or the maximum number of iterations is reached (wherein the maximum number of iterations is either pre-configured or empirically determined during the execution of the method described herein).

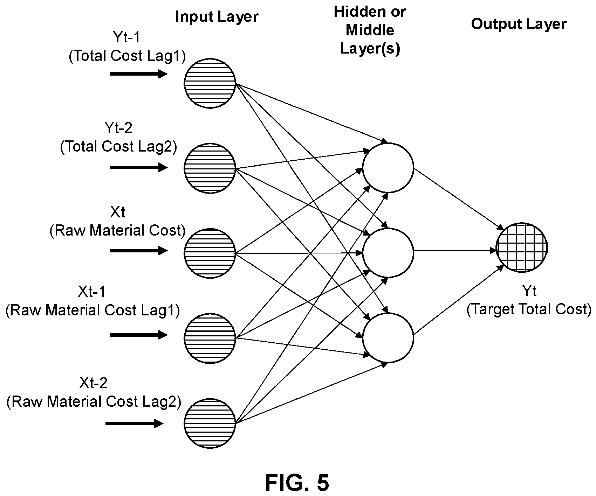

A key input for iterative learning may be a target minimum cost from the system. This target cost may be estimated with predictive machine learning using an autoregressive neural network model (e.g., also referred as Neural Network AutoRegressive with exogenous input (NNARX) model) as shown in FIG. 5. More specifically, FIG. 5, with reference to FIGS. 1 through 4B, depicts an exemplary Neural Network AutoRegressive with exogenous input (NNARX) model as implemented by the system 100 of FIG. 1, in accordance with an embodiment of the present disclosure. The Neural Network AutoRegressive with exogenous input (NNARX) model may also be referred as a neural network and interchangeably used herein. The neural network has 3 layers. The input layer may consist of 5 nodes, two of which may be the value of the target cost from the past two periods (also referred as historical target cost), and the other three may be external inputs (example, Raw material cost) for the current and past two periods. The hidden layer may have 3 nodes and the output layer may have one node for the target cost in the current period. The estimated value of this output node may be used in the system 100.

In other words, the NNARX model comprises a plurality of layers. An input layer from the plurality of layers is configured with (i) historical values of a total sourcing cost associated with the plurality of pre-defined decision scenarios, and (ii) one or more current and historical exogenous inputs impacting the total sourcing cost comprising one or more of a resource cost, a transportation cost, and one or more macroeconomic indicators; wherein a final output layer from the plurality of layers comprises a neuron representing the target cost, and at least one middle layer that comprises neurons configured to compute nodal weights of the NNARX model with a rectified linear activation function, and wherein each node of the middle layer is connected to one or more nodes of the input layer and to a node of the output layer. The one or more macroeconomic indicators comprise but are not limited to, Gross domestic product (GDP), interest rates of items, raw material and its costs, fuel prices, transportation cost, customer satisfaction index (CSI), and the like. An output layer (e.g., the final output layer) of the NNARX model is configured with the target cost. FIG. 5, with reference to FIGS. 1 through 4, depicts a configuration of a Neural Network AutoRegressive with exogenous input (NNARX) model as implemented and executed by the system 100 of FIG. 1, in accordance with an embodiment of the present disclosure. The NNARX model is obtained based on a training. For instance, the NNARX model is obtained by splitting an input dataset (e.g., historical data similar to inputs received in step 202) into a training set and a testing set. The NNARX model is further fitted on the training set to obtain a resulting NNARX model. The resulting NNARX model is used (or applied) on the testing set to compute predicted costs (e.g., also referred as sourcing cost) and a forecast error (measured through Mean Absolute Percentage Error or MAPE). The resulting NNARX model is used with a forecast error less than a predefined threshold (e.g., say 5%) to predict the target cost for subsequent time instances.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components.

For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

   obtaining, via one or more hardware processors, an input comprising a plurality of entities, a plurality of associated demands, a plurality of sources, one or more destinations, and one or more unit lane costs (202);
   retrieving, via the one or more hardware processors, one or more pre-defined decision scenarios from a plurality of pre-defined decision scenarios comprised in a database (204), wherein each of the one or more decision scenarios comprises one or more constraints;
   performing, based on the input, at least one of an optimization technique, and a simulation technique on the retrieved one or more pre-defined decision scenarios to obtain a total sourcing cost associated with each of the retrieved one or more pre-defined decision scenarios (206), wherein the total sourcing cost is obtained based on a quantity filled for each source-entity-destination combination and a corresponding unit lane cost,
   wherein the optimization technique comprises:

   creating an objective function based on the input, wherein the objective function corresponds to the one or more unit lane costs and one or more associated decision variables (206-1a), and wherein the one or more associated decision variables are quantities to be sourced for each source-entity-destination;
   converting the one or more constraints and the one or more associated decision variables with the plurality of associated demands to a first pre-defined limit and a second pre-defined limit (206-1b);
   determining, for each destination-and associated demand, a value for the one or more associated decision variables that satisfy the one or more constraints (206-1c); and
   minimizing the objective function based on the determined value of the one or more associated decision variables (206-1d), wherein the minimized objective function is indicative of the total sourcing cost for each of the retrieved one or more pre-defined decision scenarios; and

   wherein the simulation technique comprises:

   sorting the plurality of associated demands in at least one order (206-2a);
   identifying a set of sources for each sorted associated demand (206-2b);
   identifying and sorting a subset of sources with a first predetermined limit amongst the set of sources in a predefined order (206-2c), wherein the first predetermined limit serves as a constraint from the one or more constraints;

performing a comparison of each sorted associated demand with the first predetermined limit of a sorted source from the subset of sources (206-2d);

performing (206-2e), based on the comparison one of

fulfilling each sorted associated demand entirely or partially based on the comparison and updating an information corresponding to the plurality of associated demands and the first predetermined limit; or sorting the set of sources if one or more associated demands from the plurality of associated demands are partially fulfilled;

fulfilling each of the one or more associated demands entirely or partially based on a comparison of each of the one or more associated demands with a second predetermined limit (206-2f), wherein the second predetermined limit serves as another constraint from the one or more constraints; and

updating the information corresponding to the plurality of associated demands and the second predetermined limit (206-2g), wherein upon fulfilling the plurality of associated demands entirely, the total sourcing cost associated with each of the dynamically retrieved one or more pre-defined sourcing scenarios is obtained;

selecting at least one decision scenario from the retrieved one or more pre-defined decision scenarios as an optimal decision scenario based on the total sourcing cost obtained for each of the retrieved one or more pre-defined decision scenarios by using the at least one of the optimization technique, and the simulation technique (208); and

creating an ordering schedule for the plurality of associated demands based on the at least one selected decision scenario (210), wherein the ordering schedule comprises quantity of each entity to be sourced from one or more sources from the plurality of sources to fulfil each of the plurality of associated demands in the plurality of destinations.

2. The processor implemented method as claimed in claim 1, further comprising

selecting at least one scenario from the plurality of pre-defined decision scenarios as a focal scenario based on a comparison of the total sourcing cost of each pre-defined decision scenario and a target cost obtained from a Neural Network AutoRegressive with exogenous input (NNARX) model;

determining one or more modification requirements in the focal scenario, wherein the one or more modification requirements correspond to at least one of one or more inputs and one or more constraints;

modifying the at least one of the one or more inputs and the one or more constraints based on the one or more modification requirements;

deriving a scenario based on the at least one of the one or more modified inputs and the one or more modified constraints; and

performing at least one of the optimization technique, and the simulation technique on the derived scenario such that the total sourcing cost reaches a predefined threshold.

3. The processor implemented method as claimed in claim 2, wherein the NNARX model comprises a plurality of layers, wherein an input layer from the plurality of layers is configured with (i) historical values of a total sourcing cost associated with the plurality of pre-defined decision scenarios, and (ii) one or more current and historical exogenous inputs impacting the total sourcing cost further comprising one or more of a resource cost, a transportation cost, and one or more macroeconomic indicators; wherein a final output layer from the plurality of layers comprises a neuron representing the target cost, and at least one middle layer that comprises neurons configured to compute nodal weights of the NNARX model with a rectified linear activation function, and wherein each node of the middle layer is connected to one or more nodes of the input layer and to a node of the final output layer.

4. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

obtain an input comprising a plurality of entities, a plurality of associated demands, a plurality of sources, one or more destinations, and one or more unit lane costs;

retrieve one or more pre-defined decision scenarios from a plurality of pre-defined decision scenarios comprised in a database, wherein each of the one or more decision scenarios comprises one or more constraints;

perform, based on the input, at least one of an optimization technique, and a simulation technique on the retrieved one or more pre-defined decision scenarios based on the input to obtain a total sourcing cost associated with each of the retrieved one or more pre-defined decision scenarios, wherein the total sourcing cost is obtained based on a quantity filled for each source-entity-destination combination and a corresponding unit lane cost,

wherein the optimization technique comprises:

creating an objective function based on the input, wherein the objective function corresponds to the one or more unit lane costs and one or more associated decision variables, and wherein the one or more associated decision variables are quantities to be sourced for each source-entity-destination;

converting the one or more constraints and the one or more associated decision variables with the plurality of associated demands to a first pre-defined limit and a second pre-defined limit;

determining, for each destination-and associated demand, a value for the one or more associated decision variables that satisfy the one or more constraints; and

minimizing the objective function based on the determined value of the one or more associated decision variables, wherein the minimized objective function is indicative of the total sourcing cost for each of the retrieved one or more pre-defined decision scenarios; and

wherein the step of performing the at least one of the simulation technique comprises:

sorting the plurality of associated demands in at least one order;

identifying a set of sources for each sorted associated demand;

identifying and sorting a subset of sources with a first predetermined limit amongst the set of sources in a predefined order, wherein the first predetermined limit serves as a constraint from the one or more constraints;

performing a comparison of each sorted associated demand with the first predetermined limit of a sorted source from the subset of sources;

performing, based on the comparison:

fulfilling each sorted associated demand entirely or partially based on the comparison and updating an information corresponding to the plurality of associated demands and the first predetermined limit; or

sorting the set of sources if one or more associated demands from the plurality of associated demands are partially fulfilled;

fulfilling each of the one or more associated demands entirely or partially based on a comparison of each of the one or more associated demands with a second predetermined limit, wherein the second predetermined limit serves as another constraint from the one or more constraints; and

updating the information corresponding to the plurality of associated demands and the second predetermined limit, wherein upon fulfilling the plurality of associated demands entirely, the total sourcing cost associated with each of the dynamically retrieved one or more pre-defined sourcing scenarios is obtained;

select at least one decision scenario from the retrieved one or more pre-defined decision scenarios as an optimal decision scenario based on the total sourcing cost obtained for each of the retrieved one or more pre-defined decision scenarios by using the at least one of the optimization technique, and the simulation technique; and

create an ordering schedule for the plurality of associated demands based on the at least one selected decision scenario, wherein the ordering schedule comprises quantity of each entity to be sourced from one or more sources from the plurality of sources to fulfil each of the plurality of associated demands in the plurality of destinations.

5. The system as claimed in claim 4, wherein the one or more hardware processors are further configured by the instructions to:

select at least one scenario from the plurality of pre-defined decision scenarios as a focal scenario based on a comparison of the total sourcing cost of each pre-defined decision scenario and a target cost obtained from a Neural Network AutoRegressive with exogenous input (NNARX) model;

determine one or more modification requirements in the focal scenario, wherein the one or more modification requirements correspond to at least one of one or more inputs and one or more constraints;

modify the at least one of the one or more inputs and the one or more constraints based on the one or more modification requirements; and

derive a scenario based on the at least one of the one or more modified inputs and the one or more modified constraints; and

performing at least one of the optimization technique, and the simulation technique on the derived scenario such that the total sourcing cost reaches a predefined threshold.

6.   The system as claimed in claim 5, wherein the NNARX model comprises a plurality of layers, wherein an input layer from the plurality of layers is configured with (i) historical values of a total sourcing cost associated with the plurality of pre-defined decision scenarios, and (ii) one or more current and historical exogenous inputs impacting the total sourcing cost further comprising one or more of a resource cost, a transportation cost, and one or more macroeconomic indicators; wherein a final output layer from the plurality of layers comprises a neuron representing the target cost, and at least one middle layer that comprises neurons configured to compute nodal weights of the NNARX model with a rectified linear activation function, and wherein each node of the middle layer is connected to one or more nodes of the input layer and to a node of the output layer.

7.   One or more non-transitory machine-readable information storage mediums comprising one or more instructions which when executed by one or more hardware processors cause:

obtaining, an input comprising a plurality of entities, a plurality of associated demands, a plurality of sources, one or more destinations, and one or more unit lane costs;

retrieving one or more pre-defined decision scenarios from a plurality of pre-defined decision scenarios comprised in a database, wherein each of the one or more decision scenarios comprises one or more constraints;

performing, based on the input, at least one of an optimization technique, and a simulation technique on the retrieved one or more pre-defined decision scenarios to obtain a total sourcing cost associated with each of the retrieved one or more pre-defined decision scenarios, wherein the total sourcing cost is obtained based on a quantity filled for each source-entity-destination combination and a corresponding unit lane cost,

wherein the optimization technique comprises:

creating an objective function based on the input, wherein the objective function corresponds to the one or more unit lane costs and one or more associated decision variables, and wherein the one or more associated decision variables are quantities to be sourced for each source-entity-destination;

converting the one or more constraints and the one or more associated decision variables with the plurality of associated demands to a first pre-defined limit and a second pre-defined limit;

determining, for each destination-and associated demand, a value for the one or more associated decision variables that satisfy the one or more constraints; and

minimizing the objective function based on the determined value of the one or more associated decision variables, wherein the minimized objective function is indicative of the total sourcing cost for each of the retrieved one or more pre-defined decision scenarios; and

wherein the simulation technique comprises:

sorting the plurality of associated demands in at least one order;

identifying a set of sources for each sorted associated demand;

identifying and sorting a subset of sources with a first predetermined limit amongst the set of sources in a predefined order, wherein the first predetermined limit serves as a constraint from the one or more constraints;

performing a comparison of each sorted associated demand with the first predetermined limit of a sorted source from the subset of sources;

performing, based on the comparison one of

fulfilling each sorted associated demand entirely or partially based on the comparison and updating an information corresponding to the plurality of associated demands and the first predetermined limit; or

sorting the set of sources if one or more associated demands from the plurality of associated demands are partially fulfilled;

fulfilling each of the one or more associated demands entirely or partially based on a comparison of each of the one or more associated demands with a second predetermined limit, wherein the second predetermined limit serves as another constraint from the one or more constraints; and

updating the information corresponding to the plurality of associated demands and the second predetermined limit, wherein upon fulfilling the plurality of associated demands entirely, the total sourcing cost associated with each of the dynamically retrieved one or more pre-defined sourcing scenarios is obtained;

selecting at least one decision scenario from the retrieved one or more pre-defined decision scenarios as an optimal decision scenario based on the total sourcing cost obtained for each of the retrieved one or more pre-defined decision scenarios by using the at least one of the optimization technique, and the simulation technique; and

creating an ordering schedule for the plurality of associated demands based on the at least one selected decision scenario, wherein the ordering schedule comprises quantity of each entity to be sourced from one or more sources from the plurality of sources to fulfil each of the plurality of associated demands in the plurality of destinations.

8. The one or more non-transitory machine-readable information storage mediums as claimed in claim 7, wherein the one or more instructions which when executed by the one or more hardware processors further cause:

selecting at least one scenario from the plurality of pre-defined decision scenarios as a focal scenario based on a comparison of the total sourcing cost of each pre-defined decision scenario and a target cost obtained from a Neural Network AutoRegressive with exogenous input (NNARX) model;

determining one or more modification requirements in the focal scenario, wherein the one or more modification requirements correspond to at least one of one or more inputs and one or more constraints;

modifying the at least one of the one or more inputs and the one or more constraints based on the one or more modification requirements;

deriving a scenario based on the at least one of the one or more modified inputs and the one or more modified constraints; and

performing at least one of the optimization technique, and the simulation technique on the derived scenario such that the total sourcing cost reaches a predefined threshold.

9. The one or more non-transitory machine-readable information storage mediums as claimed in claim 8, wherein an input layer from the plurality of layers is configured with (i) historical values of a total sourcing cost associated with the plurality of pre-defined decision scenarios, and (ii) one or more current and historical exogenous inputs impacting the total sourcing cost comprising one or more of a resource cost, a transportation cost, and one or more macroeconomic indicators; wherein a final output layer from the plurality of layers comprises a neuron representing the target cost, and at least one middle layer that comprises neurons configured to compute nodal weights of the NNARX model with a rectified linear activation function, and wherein each node of the middle layer is connected to one or more nodes of the input layer and to a node of the output layer.

SYSTEM
100

MEMORY
102

DATABASE
108

HARDWARE
PROCESSOR(S)
104

INTERFACE(S)
106

FIG. 1

obtaining an input comprising a plurality of entities, a plurality of associated demands, a plurality of sources, one or more destinations, and one or more unit lane costs ⟋⟍ 202

retrieving one or more pre-defined decision scenarios from a plurality of pre-defined decision scenarios comprised in a database, wherein each of the one or more decision scenarios comprises one or more constraints ⟋⟍ 204

performing, based on the input, at least one of an optimization technique, and a simulation technique on the retrieved one or more pre-defined decision scenarios to obtain a total sourcing cost associated with each of the retrieved one or more pre-defined decision scenarios, wherein the total sourcing cost is obtained based on a quantity filled for each source-entity-destination combination and a corresponding unit lane cost ⟋⟍ 206

selecting at least one decision scenario from the retrieved one or more pre-defined decision scenarios as an optimal decision scenario based on the total sourcing cost obtained for each of the retrieved one or more pre-defined decision scenarios by using the at least one of the optimization technique, and the simulation technique ⟋⟍ 208

creating an ordering schedule for the plurality of associated demands based on the at least one selected decision scenario, wherein the ordering schedule comprises quantity of each entity to be sourced from one or more sources from the plurality of sources to fulfil each of the plurality of associated demands in the plurality of destinations ⟋⟍ 210

**FIG. 2**

creating an objective function based on the input, wherein the objective function corresponds to the one or more unit lane costs and one or more associated decision variables, and wherein the one or more associated decision variables are quantities to be sourced for each source-entity-destination

206-1a

converting the one or more constraints and the one or more associated decision variables with the plurality of associated demands to a first pre-defined limit and a second pre-defined limit

206-1b

determining, for each destination-and associated demand, a value for the one or more associated decision variables that satisfy the one or more constraints

206-1c

minimizing the objective function based on the determined value of the one or more associated decision variables, wherein the minimized objective function is indicative of the total sourcing cost for each of the retrieved one or more pre-defined decision scenarios

206-1d

**FIG. 3A**

| sorting the plurality of associated demands in at least one order | 206-2a |

| identifying a set of sources for each sorted associated demand | 206-2b |

| identifying and sorting a subset of sources with a first predetermined limit amongst the set of sources in a predefined order, wherein the first predetermined limit serves as a constraint from the one or more constraints | 206-2c |

| performing a comparison of each sorted associated demand with the first predetermined limit of a sorted source from the subset of sources | 206-2d |

| performing, based on the comparison: fulfilling each sorted associated demand entirely or partially based on the comparison and updating an information corresponding to the plurality of associated demands and the first predetermined limit; or sorting the set of sources if one or more associated demands from the plurality of associated demands are partially fulfilled | 206-2e |

| fulfilling each of the one or more associated demands entirely or partially based on a comparison of each of the one or more associated demands with a second predetermined limit, wherein the second predetermined limit serves as another constraint from the one or more constraints | 206-2f |

| updating the information corresponding to the plurality of associated demands and the second predetermined limit , wherein upon fulfilling the plurality of associated demands entirely, the total sourcing cost associated with each of the dynamically retrieved one or more pre-defined sourcing scenarios is obtained | 206-2g |

**FIG. 3B**

```
┌──────────────┐
│ Define initial│
│ scenarios set │
└──────┬───────┘
       │
       ▼
┌──────────────┐        ┌──────────────┐         ┌──────────┐       ┌──────────────┐
│ Run & review │        │ Recommendation│        │ Change   │       │   Modify     │  No
│  scenarios   │        │  / Decision   │        │ inputs   │──────▶│ constraints  │────┐
└──────┬───────┘        └──────▲───────┘         └────▲─────┘       │    also?     │    │
       │                       │ No                Yes │            └──────┬───────┘    │
       ▼                       │                       │               Yes │            │
┌──────────────┐        ◇──────────◇   Yes   ◇──────────────◇        ┌──────────────┐   │
│ Select focal │───────▶│Modification│──────▶│ Modify Inputs?│       │   Change     │   │
│  scenario    │        │  needed?   │       ◇──────────────◇        │ constraints  │──▶│
└──────────────┘        ◇──────────◇                │  No            └──────▲───────┘   ▼
                                                     │                   Yes │     ┌──────────────┐
                                                     │                ◇──────────◇   │ Define /create│
                                                     └───────────────▶│  Modify  │   │ new scenarios │
                                                           No          │Constraints?│ No └──────────────┘
                                                                       ◇──────────◇
```

**FIG. 4**

**Input Layer**

**Hidden or Middle Layer(s)**

**Output Layer**

Yt-1
(Total Cost Lag1)

Yt-2
(Total Cost Lag2)

Xt
(Raw Material Cost)

Xt-1
(Raw Material Cost Lag1)

Xt-2
(Raw Material Cost Lag2)

Yt
(Target Total Cost)

**FIG. 5**

European Patent Office

**EUROPEAN SEARCH REPORT**

Application Number

EP 23 18 3630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/027826 A1 (MAKHIJA SUBHASH [US] ET AL) 27 January 2022 (2022-01-27) * page 8, paragraphs 10, 78-79, 94-96, 101, 110-111, 120-121; figure 2 * | 1-9 | INV. G06Q10/0631 G06Q10/087 G06Q10/04 |
| A | KAWTUMMACHAI R ET AL: "Order allocation in a multiple-supplier environment", INTERNATIONAL JOURNAL OF PRODUCTION ECONOMICS, ELSEVIER, AMSTERDAM, NL, vol. 93-94, 8 January 2005 (2005-01-08), pages 231-238, XP027811497, ISSN: 0925-5273 [retrieved on 2005-01-08] * page 232 – page 237 * | 1-9 | |
| A | US 2009/216576 A1 (SAEED BARUCH ISMAIL [US] ET AL) 27 August 2009 (2009-08-27) * paragraphs [0032], [0039]; figures 1-2 * | 1-9 | |
| A | US 2021/304220 A1 (KULKARNI SARANG [IN] ET AL) 30 September 2021 (2021-09-30) * paragraph [0025] – paragraph [0059] * | 1-9 | TECHNICAL FIELDS SEARCHED (IPC) G06Q |
| A | PRASANNAVENKATESAN S ET AL: "Multi-objective supply chain sourcing strategy design under risk using PSO and simulation", THE INTERNATIONAL JOURNAL OF ADVANCED MANUFACTURING TECHNOLOGY, SPRINGER, BERLIN, DE, vol. 61, no. 1 – 4, 5 November 2011 (2011-11-05), pages 325-337, XP035073602, ISSN: 1433-3015, DOI: 10.1007/S00170-011-3710-Y * pages 328, 333 – page 334 * | 1-9 | |

-/--

The present search report has been drawn up for all claims

| Place of search | Date of completion of the search | Examiner |
|---|---|---|
| Munich | 20 November 2023 | Diaz Calvo, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

| | Application Number |
|---|---|
| | EP 23 18 3630 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Wikipedia – Nonlinear autoregressive exogenous model", , 25 August 2021 (2021-08-25), XP093103631, Retrieved from the Internet: URL:https://en.wikipedia.org/wiki/Nonlinear_autoregressive_exogenous_model#:~:text=In%20time%20series%20modeling%2C%20a,of%20the%20same%20series%3B%20and [retrieved on 2023-11-20] * page 1 * ----- | 2,3,5,6, 8,9 | |

TECHNICAL FIELDS
SEARCHED     (IPC)

The present search report has been drawn up for all claims

| Place of search | Date of completion of the search | Examiner |
|---|---|---|
| Munich | 20 November 2023 | Diaz Calvo, Sonia |

EPO FORM 1503 03.82 (P04C01)

page 2 of 2

## ANNEX TO THE EUROPEAN SEARCH REPORT
## ON EUROPEAN PATENT APPLICATION NO.

EP 23 18 3630

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2023

| Patent document cited in search report | | Publication date | Patent family member(s) | Publication date |
|---|---|---|---|---|
| US 2022027826 A1 | | 27-01-2022 | NONE | |
| US 2009216576 A1 | | 27-08-2009 | NONE | |
| US 2021304220 A1 | | 30-09-2021 | NONE | |

EPO FORM P0459

For more details about this annex : see Official Journal of the European Patent Office, No. 12/82

**EP 4 303 792 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221039418
- US 17524220 B